(19) Europäisches Patentamt
European Patent Office
Office européen des brevets

(11) Veröffentlichungsnummer: **0 083 300**
**B1**

(12) # EUROPÄISCHE PATENTSCHRIFT

(45) Veröffentlichungstag der Patentschrift: **15.10.86**

(21) Anmeldenummer: **82810053.7**

(22) Anmeldetag: **05.02.82**

(51) Int. Cl.⁴: **D 06 P 1/39**, D 06 P 3/06, C 09 B 1/34, D 06 P 1/00, C 09 B 67/22

(54) **Farbstoffmischungen und deren Verwendung.**

(30) Priorität: **29.12.81 CH 8329/81**
**29.12.81 CH 8330/81**

(43) Veröffentlichungstag der Anmeldung: **06.07.83 Patentblatt 83/27**

(45) Bekanntmachung des Hinweises auf die Patenterteilung: **15.10.86 Patentblatt 86/42**

(84) Benannte Vertragsstaaten: **AT BE CH DE FR GB IT LI NL**

(56) Entgegenhaltungen:
**EP-A-0 042 357**
**CH-A-541 653**
**DE-A-2 130 698**

(73) Patentinhaber: **CIBA- GEIGY AG, Klybeckstrasse 141, CH- 4002 Basel (CH)**

(72) Erfinder: **Schaetzer, Harry, Waldmattstrasse 39, D-7867 Wehr 2 (DE)**
Erfinder: **Raisin, Helmut, Im Baumgarten 9, CH-4125 Riehen (CH)**
Erfinder: **Mäusezahl, Dieter, Dr., Langgartenstrasse 19, CH- 4105 Biel- Benken (CH)**

**EP 0 083 300 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die der vorliegenden Erfindung zugrunde liegende Aufgabe war es, Anthrachinon-Farbstoffmischungen zu finden, die zum Färben von natürlichen oder synthetischen Polyamidmaterialien aus wässrigem Bad geeignet sind, die sehr gute Echtheitseigenschaften, insbesondere in der Lichtechtheit, aufweisen und die insbesondere in Kombination mit anderen Farbstoffen ein gutes Ziehverhalten, insbesondere aus Kurzflotten, zeigen.

Es wurde nun gefunden, dass die Farbstoffmischung der Farbstoffe der Formeln (1) und (2) den genannten Anforderungen genügt.

Gegenstand der vorliegenden Erfindung ist somit eine Farbstoffmischung, die einen Farbstoff der Formel

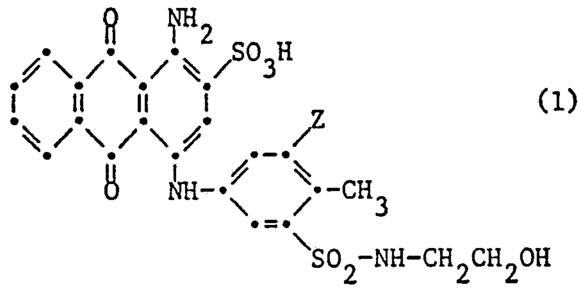

(1),

worin Z Wasserstoff oder Methyl bedeutet, und einen Farbstoff der Formel

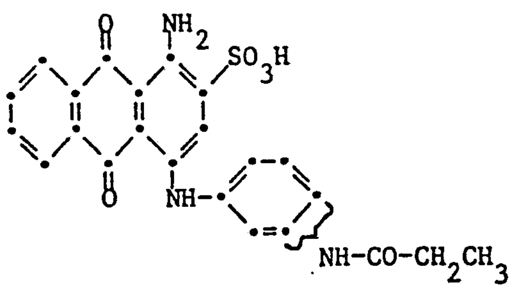

(2)

enthält, wobei Z in Formel (1) Wasserstoff ist, wenn der Propionylaminorest in Formel (2) in m-Stellung zur NH-Gruppe gebunden ist. Somit kann die erfindungsgemässe Farbstoffmischung einen Farbstoff der Formel

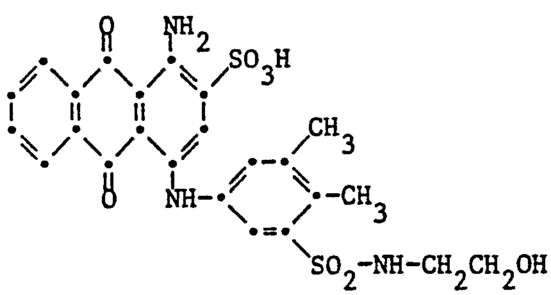

(3)

und einen Farbstoff der Formel

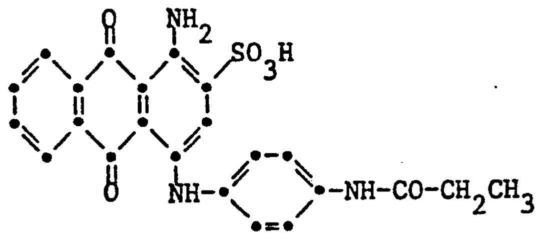

(4)

oder einen Farbstoff der Formel

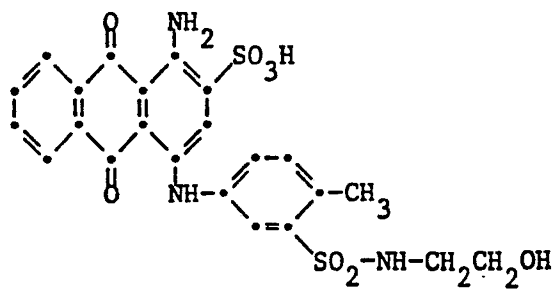

(5)

und einen Farbstoff der Formel (2) enthalten, wobei als Farbstoff der Formel (2) der Farbstoff der Formel (4) oder der Farbstoff der Formel

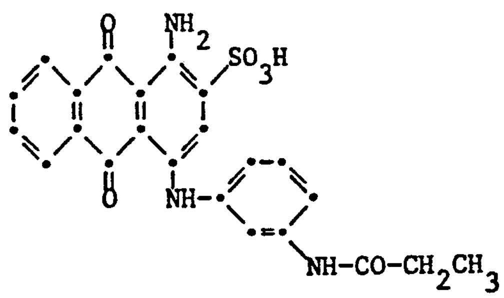

(6)

in Betracht kommt.

In den erfindungsgemässen Farbstoffmischungen ist das Verhältnis der Farbstoffe der Formeln (1) und (2), (3) und (4), (5) und (2), (5) und (4) oder (5) und (6) von 20:80 bis 80:20 und insbesondere das Verhältnis der Farbstoffe der Formeln (3) und (4), (5) und (4) oder (5) und (6) von 40:60 bis 60:40 bevorzugt. Das Verhältnis der Farbstoffe der Formeln (3) und (4) oder (5) und (4) von 50:50 bis 60:40 und insbesondere von 55:45 bis 57:43 und der Farbstoff der Formeln (5) und (6) von 50:50 bis 60:40 und insbesondere von 52:48 ist ganz besonders bevorzugt.

Die Anthrachinonfarbstoffe der Formeln (3), (4), (5) und (6) sind bekannt; so können die Farbstoffe der Formeln (3) und (5) analog den Angaben aus der US-Patentschrift 3,778,453 und der Farbstoff der Formel (4) gemäss den Angaben aus der deutschen Patentschrift 945,643 hergestellt werden. Der Farbstoff der Formel (6) kann in Analogie zu dem in der deutschen Patentschrift 538,310 angegebenen Verfahren hergestellt werden, indem man Propionylchlorid anstelle von Chloracetylchlorid verwendet.

Die erfindungsgemässe Farbstoffmischung kann durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen durch Zerstäubungstrocknung der wässrigen Farbstoffmischungen

hergestellt werden.

Gegenstand der Erfindung ist ferner ein Verfahren zum Farben und Bedrucken von natürlichen oder synthetischen Polyamidmaterialien mit einer Farbstoffmischung, die die Farbstoffe der Formeln (1) und (2) bzw. (3) und (4), (5) und (4) oder (5) und (6) enthält, sowie das gefärbte oder bedruckte Material, insbesondere das Textilmaterial.

Als synthetische Polyamidmaterialien kommen z.B. Nylon oder Perlon in Betracht und als natürliche Polyamidmaterialien z.B. Wolle. Zum Färben und Bedrucken werden dabei die üblichen Färbe- bzw. Druckverfahren angewendet.

Die Farbstoffmischung mit den Farbstoffen der Formeln (1) und (2) bzw. (3) und (4), (5) und (4) oder (5) und (6) eignet sich besonders zum Färben und Bedrucken in Kombination mit anderen Farbstoffen und insbesondere zum Färben und Bedrucken nach dem Trichromie-Prinzip. Unter Trichromie ist dabei die additive Farbmischung dreier passend gewählter gelb-, rot- und blaufärbender Farbstoffe in den zur Erzielung der gewünschten Nuance notwendigen Mengen zu verstehen. Besonders geeignet ist die erfindungsgemässe Farbstoffmischung zum Färben aus Kurzflotten wie z.B. bei Kontinuefärbeverfahren oder diskontinuierlichen und kontinuierlichen Schaumfärbeverfahren.

Die erfindungsgemässe Farbstoffmischung zeichnet sich durch allgemein gute Eigenschaften wie z.B. gute Löslichkeit, Kaltlösungsbeständigkeit, gutes Aufziehverhalten und insbesondere durch gute Kombinierbarkeit mit anderen Farbstoffen aus.

Das zu färbende oder zu bedruckende Textilmaterial kann in verschiedencn Verarbeitungsformen vorliegen, wie z.B. als Faser, Garn, Gewebe oder Gewirke und insbesondere in Form von Teppichen.

In der erfindungsgemässen Farbstoffmischung liegen die Farbstoffe der Formeln (1) und (2) bzw. (3) und (4), (5) und (4) oder (5) und (6) entweder in der Form ihrer freien Sulfonsäure oder vorzugsweise als deren Salze wie z.B. der Alkali-, Erdalkali- oder Ammoniumsalze oder als Salze eines organischen Amins vor. Als Beispiele seien die Natrium-, Lithium- oder Ammoniumsalze oder das Salz des Triäthanolamins genannt.

Die Farbstoffmischung enthält in der Regel weitere Zusätze wie z.B. Kochsalz oder Dextrin.

Die Färbeflotten oder Druckpasten können ebenfalls weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker wie z.B. Alginate und Celluloseäther, enthalten.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

**Beispiel 1**

Zur Herstellung der Farbstoffmischung, die einen Farbstoff der Formel

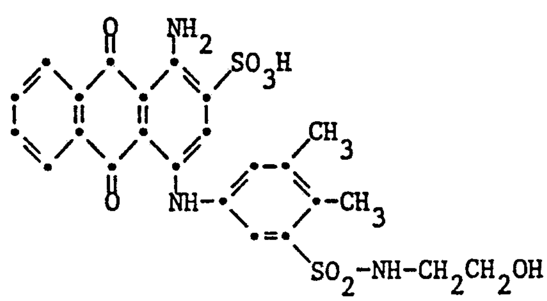

(3)

oder einen Farbstoff der Formel

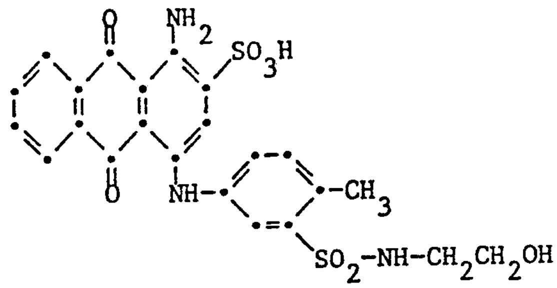

(5)

und einen Farbstoff der Formel

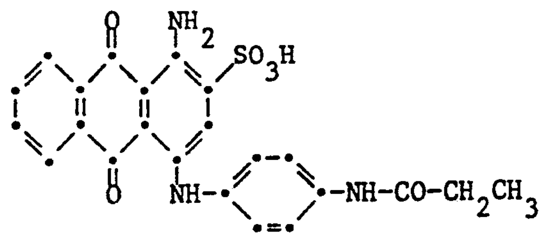

(4)

oder einen Farbstoff der Formel

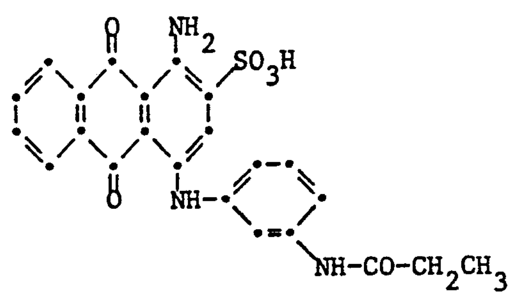

(6)

ausgenommen die Kombination der Farbstoffe der Formeln (3) und (6), enthält, werden in einem Mixer

a) 30 2 Teile des Farbstoffs der Formel (3) und 69,8 Teile des Farbstoffs der Formel (4) homogen gemischt und ergeben 100 Teile der Mischung, die im folgenden als Farbstoffmischung A bezeichnet wird;

b) 56,6 Teile des Farbstoffs der Formel (3) und 43,4 Teile des Farbstoffs der Formel (4) homogen gemischt und ergeben 100 Teile der Mischung, die im folgenden als Farbstoffmischung B bezeichnet wird;

c) 79,6 Teile des Farbstoffs der Formel (3) und 20,4 Teile des Farbstoffs der Formel (4) homogen gemischt und ergeben 100 Teile der Mischung, die im folgenden als Farbstoffmischung C bezeichnet wird;

d) 30 2 Teile des Farbstoffs der Formel (5) und 69,8 Teile des Farbstoffs der Formel (4) homogen gemischt und ergeben 100 Teile der Mischung, die im folgenden als Farbstoffmischung D bezeichnet wird;

e) 56,6 Teile des Farbstoffs der Formel (5) und 43,4 Teile des Farbstoffs der Formel (4) homogen gemischt und ergeben 100 Teile der Mischung, die im folgenden als Farbstoffmischung E bezeichnet wird;

f) 79,6 Teile des Farbstoffs der Formel (5) und 20,4 Teile des Farbstoffs der Formel (4) homogen gemischt und ergeben 100 Teile der Mischung, die im folgenden als Farbstoffmischung F bezeichnet wird;

g) 26,6 Teile des Farbstoffs der Formel (5) und 73,4 Teile des Farbstoffs der Formel (6) homogen gemischt und ergeben 100 Teile der Mischung, die im folgenden als Farbstoffmischung G bezeichnet wird;

h) 52 Teile des Farbstoffs der Formel (5) und 48 Teile des Farbstoffs der Formel (6) homogen gemischt und ergeben 100 Teile der Mischung, die im folgenden als Farbstoffmischung H bezeichnet wird;

i) 76,5 Teile des Farbstoffs der Formel (5) und 23,5 Teile des Farbstoffs der Formel (6) homogen gemischt und ergeben 100 Teile der Mischung, die im folgenden als Farbstoffmischung J bezeichnet wird.

**Beispiel 2**

Man färbt 10 Teile Helancatrikot in 500 Teilen einer wässrigen Flotte, die 2 g/l Ammonacetat enthält und mit Essigsäure auf pH 5 gestellt wird. Als Farbstoffe werden 0,27% des gelben Farbstoffs der Formel

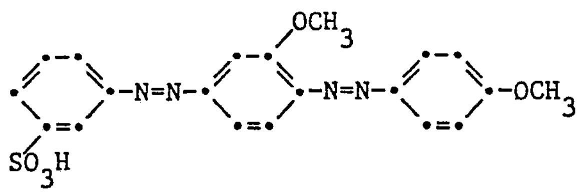

(7),

0,12% des roten Farbstoffs der Formel

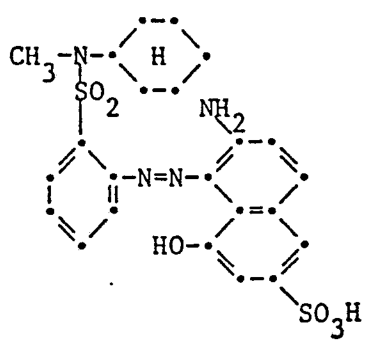

(8)

und 0,13% der gemäss Beispiel 1b) erhaltenen blauen Farbstoffmischung B verwendet, wobei sich die Mengenangaben auf das Fasergewicht beziehen. Die Färbedauer bei einer Temperatur von 60 bis 98° beträgt 30 bis 90 Minuten. Das gefärbte Helancastück wird anschliessend herausgenommen und wie üblich gespült und getrocknet. Man erhält ein in neutral braunem Farbton völlig egal gefärbtes Gewebestück, das keinerlei materialbedingte Streifigkeit aufweist.

Verwendet man anstelle von 0,27% des gelben Farbstoffs der Formel (7) und 0,12% des roten Farbstoffs der Formel (8) sowie 0,13% der blauen Farbstoffmischung B die in der folgenden Tabelle 1 angegebenen Farbstoffe der formeln (7) und (8) sowie die Farbstoffmischungen aus Beispiel 1, so erhält man die in dem angegebenen Farbton völlig egal gefärbten Gewebestücke.

**Tabelle 1**

| Beispiel | verwendete Farbstoffe | Farbton |
|---|---|---|
| 3 | 0,18% des Farbstoffs der Formel (7)<br>0,18% des Farbstoffs der Formel (8)<br>0,077% der Farbstoffmischung C | rotstichig braun |
| 4 | 0,25% des Farbstoffs der Formel (7)<br>0,04% des Farbstoffs der Formel (8)<br>0,14% der Farbstoffmischung A | oliv |

| Beispiel | verwendet Farbstoffe | Farbton |
|---|---|---|
| 5 | 0,27 % des Farbstoffs der Formel (7)<br>0,12 % des Farbstoffs der Formel (8)<br>0,13 % der Farbstoffmischung H | neutrales braun |
| 6 | 0,18 % des Farbstoffs der Formel (7)<br>0,17 % des Farbstoffs der Formel (8)<br>0,07 % der Farbstoffmischung J | rotstichig braun |
| 7 | 0,25 % des Farbstoffs der Formel (7)<br>0,036 % des Farbstoffs der Formel (8)<br>0,124 % der Farbstoffmischung G | oliv |
| 8 | 0,29 % des Farbstoffs der Formel (7)<br>0,13 % des Farbstoffs der Formel (8)<br>0,13 % der Farbstoffmischung E | neutrales braun |
| 9 | 0,18 % des Farbstoffs der Formel (7)<br>0,18 % des Farbstoffs der Formel (8)<br>0,077 % der Farbstoffmischung F | rotstichig braun |
| 10 | 0,25 % des Farbstoffs der Formel (7)<br>0,04 % des Farbstoffs der Formel (8)<br>0,14 % der Farbstoffmischung D | oliv |

**Beispiel 11**

Man färbt 10 Teile Helancatrikot in 500 Teilen einer wässerigen Flotte, die 2 g/l Ammonacetat enthält und mit Essigsäure auf pH 5 gestellt ist. Der Anteil der Farbstoffmischung B, E oder G beträgt 0,9%, bezogen auf das Fasergewicht. Die Färbedauer bei einer Temperatur von 98° beträgt 30 bis 90 Minuten. Das gefärbte Helancastück wird anschliessend herausgenommen und wie üblich gespült und getrocknet. Man erhält mit der Farbstoffmischung B oder E ein in grünstichig blauem oder mit der Farbstoffmischung G ein in rotstichig blauem Farbton egal gefärbtes Gewebestück, das keinerlei materialbedingte Streifigkeit aufweist.

**Beispiel 12**

Man färbt 10 Teile Polyamid 66-Garn in 400 Teilen einer wässrigen Flotte, die 1,5 g/l Ammonacetat enthält und mit Essigsäure auf pH 5,5 gestellt wird. Als Farbstoffe werden 0,27% des Farbstoffs der Formel (7), 0,12% des Farbstoffs der Formel (8) und 0,13% der gemäss Beispiel 1b) erhaltenen Farbstoffmischung B verwendet, wobei sich die Mengenangaben auf das Fasergewicht beziehen. Das Färbebad wird innerhalb von 30 Minuten auf 98° erhitzt und 60 Minuten bei 96° bis 98° gehalten. Das gefärbte Garn wird anschliessend herausgenommen und wie üblich gespült und getrocknet. Man erhält ein in neutral braunem Farbton gefärbtes Garn.

Verwendet man anstelle von 0,27% des gelben Farbstoffs der Formel (7) und 0,12% des roten Farbstoffs der Formel (8) sowie 0,13% der blauen Farbstoffmischung B die in der folgenden Tabelle 2 angegebenen Farbstoffe der Formeln (7) und (8) sowie die Farbstoffmischungen aus Beispiel 1, so erhält man das in dem angegebenen Farbton gefärbte Garn.

**Tabelle 2**

| Beispiel | verwendete Farbstoffe | Farbton |
|---|---|---|
| 13 | 0,18 % des Farbstoffs der Formel (7)<br>0,18 % des Farbstoffs der Formel (8)<br>0,077 % der Farbstoffmischung C | rotstichig braun |
| 14 | 0,25 % des Farbstoffs der Formel (7)<br>0,04 % des Farbstoffs der Formel (8)<br>0,14 % der Farbstoffmischung A | oliv |
| 15 | 0,27 % des Farbstoffs der Formel (7)<br>0,12 % des Farbstoffs der Formel (8)<br>0,13 % der Farbstoffmischung H | neutrales braun |

| Beispiel | verwendete Farbstoffe | Farbton |
|---|---|---|
| 16 | 0,18 % des Farbstoffs der Formel (7)<br>0,17 % des Farbstoffs der Formel (8)<br>0,07 % der Farbstoffmischung J | rotstichig braun |
| 17 | 0,25 % des Farbstoffs der Formel (7)<br>0,036 % des Farbstoffs der Formel (8)<br>0,124 % der Farbstoffmischung G | oliv |
| 18 | 0,29 % des Farbstoffs der Formel (7)<br>0,13 % des Farbstoffs der Formel (8)<br>0,13 % der Farbstoffmischung E | neutrales braun |
| 19 | 0,18 % des Farbstoffs der Formel (7)<br>0,18 % des Farbstoffs der Formel (8)<br>0,077 % der Farbstoffmischung F | rotstichig braun |
| 20 | 0,25 % des Farbstoffs der Formel (7)<br>0,04 % des Farbstoffs der Formel (8)<br>0,14 % der Farbstoffmischung D | oliv |

Verwendet man ferner anstelle des gelben Farbstoffs der Formel (7) den orangen Farbstoff der Formel

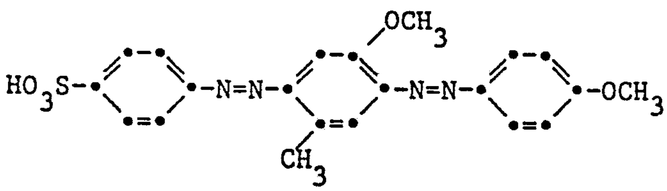

(9)

zusammen mit dem roten Farbstoff der Formel (8) und den Farbstoffmischungen aus Beispiel 1, so erhält man mit den in der folgenden Tabelle 3 angegebenen Farbstoffen das in dem angegebenen Farbton gefärbte Garn.

**Tabelle 3**

| Beispiel | Farbstoffe | Farbton |
|---|---|---|
| 21 | 0,27 % des Farbstoffs der Formel (9)<br>0,1 % des Farbstoffs der Formel (8)<br>0,14 % der Farbstoffmischung B | neutral braun |
| 22 | 0,18 % des Farbstoffs der Formel (9)<br>0,12 % des Farbstoffs der Formel (8)<br>0,09 % der Farbstoffmischung C | rotstichig braun |
| 23 | 0,25 % des Farbstoffs der Formel (9)<br>0,03 % des Farbstoffs der Formel (8)<br>0,16 % der Farbstoffmischung A | oliv |
| 24 | 0,27 % des Farbstoffs der Foarmel (9)<br>0,09 % des Farbstoffs der Formel (8)<br>0,14 % der Farbstoffmischung H | neutral braun |
| 25 | 0,18 % des Farbstoffs der Formel (9)<br>0,11 % des Farbstoffs der Formel (8)<br>0,09 % der Farbstoffmischung J | rotstichig braun |
| 26 | 0,25 % des Farbstoffs der Formel (9)<br>0,02 % des Farbstoffs der Formel (8)<br>0,14 % der Farbstoffmischung G | oliv |
| 27 | 0,27 % des Farbstoffs der Formel (9)<br>0,1 % des Farbstoffs der Formel (8)<br>0,14 % der Farbstoffmischung E | neutral braun |
| 28 | 0,18 % des Farbstoffs der Formel (9)<br>0,12 % des Farbstoffs der Formel (8)<br>0,09 % der Farbstoffmischung F | rotstichig braun |

| Beispiel | Farbstoffe | Farbton |
|---|---|---|
| 29 | 0,25 % des Farbstoffs der Formel (9)<br>0,03 % des Farbstoffs der Formel (8)<br>0,16 % der Farbstoffmischung D | oliv |

**Beispiel 30**

(Teppichausziehverfahren):

Ein Baumfärbeapparat (Labor-Stückfärbeapparat, Modell 10 der Firma Rudolf Then) besteht in seinen Hauptteilen aus dem liegenden Färbekessel mit Kühlmantel, der mit dem Nebenkessel mit seiner Spezial-Umkehrpumpe zu einem Zirkulationssystem verbunden ist.

In diesen Färbeapparat wird ein Warenbaum eingeführt, der mit einer Polyamid-6 Schlingenflor-Teppichware von 50 cm Breite, 135 cm Länge und einem Gewicht von 380 g bestückt wurde. In den Nebenkessel wurden 6 Liter enthärtetes Wasser eingefüllt und 60 ml 2n Natronlauge zugegeben. Durch Oeffnen der entsprechenden Ventile (Nebenkessel, bzw. Verbindungsleitungen, Pumpe/Färbekessel) strömt die Flotte aus dem Nebenkessel mit eigenem Gefälle in den Färbekessel, dabei fliesst die verdrängte Luft durch die Entlüftungsleitung in den Nebenkessel ab. Nach Füllung des Färbeapparates bleibt im Nebenkessel ein Flottenrest von ca. 5 cm Höhe, danach wird die Umwälzpumpe eingeschaltet. Zur Kontrolle des pH-Wertes wurde in die Rohrleitung zwischen Färbe- und Nebenkessel (Fliessrichtung) eine Bohrung angebracht und eine kombinierte Glaselektrode eingeführt. Die Färbeflotte zirkuliert während des gesamten Färbeprozesses von innen nach aussen, dabei beträgt das Druckgefälle 0,1 bis 0,2 Bar, die Förderleistung der Pumpe ca. 6 Liter pro Minute. Die Flotte wird auf 98° erhitzt und 7,6 g eines anionischen faseraffinen Egalisiermittels, gelöst in 100 ml

Wasser, innerhalb von 5 Minuten in den Nebenkessel zugegeben. Die Färbetemperatur wird auf 97 bis 98° eingestellt, der pH-Wert beträgt 10,7. Der pH-Wert einer entnommenen, auf 20° abgekühlten Probe beträgt 11,9.

Nun werden 2,5 g des gelben Farbstoffs der Formel (7) von Beispiel 2 und 1,8 g der blauen Farbstoffmischung C von Beispiel 1 beide gelöst in 200 ml heissem Wasser, innerhalb von 10 Minuten aus einem Tropftrichter in den Nebenkessel zulaufen gelassen. Nach 30 Minuten werden mittels einer Kolbenbürette während 10 Minuten mit einer Geschwindigkeit von 5,5 ml pro Minute und während weiteren 20 Minuten mit einer Geschwindigkeit von 2,25 ml pro Minute, insgesamt 100 ml In Schwefelsäure zudosiert.

Der pH-Wert beträgt nach weiteren 10 Minuten 3,8. Das Färbebad ist erschöpft, d.h. die Farbstoffe sind zu über 99% auf das Färbegut aufgezogen. Die Beheizung wird abgestellt und mit Hilfe der indirekten Kühlung der Färbeflotte auf 60° gekühlt. Während dieser Zeit erhöht sich der PH-Wert auf 3,9. Die fast wasserklare Flotte wird in den Nebenkessel zurückgepumpt und der Warenbaum herausgenommen. Das Teppichmaterial wird abgewickelt, zentrifugiert und getrocknet. Die Polyamid-6-Schlingen-Teppichware ist flächenegal grün gefärbt.

Verwendet man anstelle von 1,8 g der blauen Farbstoffmischung C 1,8 g der blauen Farbstoffmischung F so erhält man bei sonst gleicher Verfahrensweise eine ebenfalls flächenegal grün gefärbte Polyamid-6-Schlingen-Teppichware.

**Beispiel 31**

(Teppichdruck)

Ein Velours-Teppichboden aus Polyamid-6 mit einem Gewicht von 350 bis 400 g/$m^2$ wird mit einer Klotzflotte, bestehend aus 988 Teilen Wasser, 10 Teilen Natronlauge 36°, Bé und 2 Teilen Netzmittel, auf einem Foulard imprägniert und auf eine Flottenaufnahme von 80 % abgequetscht.

Auf den so vorbehandelten Teppich wird mittels einer Düse eine Farbpaste der folgenden Zusammensetzung in Form eines Musters aufgespritzt:

942 Teile Wasser,
50 Teile Verdicker,
3 Teile Antischaummittel,
3 Teile des gelben Farbstoffes der Formel (7) von Beispiel 2,
1 Teil des roten Farbstoffes der Formel (8) von Beispiel 2,
sowie 1 Teil der blauen Farbstoffmischung A von Beispiel 1 oder 1 Teil der blauen Farbstoffmischung D von Beispiel 1.

Der verwendete Verdicker weist die folgende Zusammensetzung auf:

240 Teile Lackbenzin,
50 Teile Wasser-in-Oel-Emulgator,
20 Teile Oel-in-Wasser-Emulgator,
20 Teile Antischaummittel,
50 Teile vernetztes Carboxyvinylpolymer mit einem Molekulargewicht von ca. 4.000.000,
70 Teile lineares Carboxyvinylpolymer mit einem Molekulargewicht von ca. 1.000.000, und
550 Teile Wasser, dessen pH-Wert mit Essigsäure auf 4,5 gestellt wurde.

Das mit der Farbpaste bespritzte Material wird anschliessend während 5 Minuten mit Sattdampf von 101° behandelt zur Fixierung der Farbstoffe, gespült, neutralisiert, erneut gespült und getrocknet.

Man erhält einen Velours-Teppichboden mit einem braunen Muster mit sehr scharfen Konturen, welche seine sehr gute Penetration und keinerlei "Frosting" aufweist.

Verwendet man anstelle von einem Teil der blauen Farbstoffmischung A oder D von Beispiel 1 ein Teil der blauen Farbstoffmischung G von Beispiel 1 so erhält man bei sonst gleicher Verfahrensweise einen Velours-Teppichboden mit einem braunen Muster, der ähnlich gute Eigenschaften besitzt.

**Beispiel 32**

(Teppich-Kontinue-Färbung)

4,5 Teile des gelben Farbstoffs der Formel (7) von Beispiel 2 und 1,5 Teile der blauen Farbstoffmischung B von Beispiel 1 werden in 100 Teilen Wasser durch kurzes Kochen gelöst. Diese Lösung wird hierauf zu einer Lösung, enthaltend 3 Teile eines Verdickungsmittels auf der Basis von Johannisbrotkernmehl, 5,0 Teile eines koazervatbildenden Klotzhilfsmittels auf der Basis eines Kondensationsproduktes einer höher molekularen Fettsäure mit einem Oxyalkylamin, 2,0 Teile krist. Mononatriumphosphat und 1,0 Teile krist. Dinatriumphosphat in 500 Teilen kaltem Wasser zugegeben. Anschliessend wird mit kaltem Wasser auf 1000 Teile aufgefüllt. Von dieser, einen pH-Wert von 5,5 bis 6,5 aufweisenden Flotte werden 300%, bezogen auf das Teppichgewicht, auf einen Polyamid-6.6-Nadelflor-Rohteppich aufgetragen, bei einer Teppichgeschwindigkeit von 8 Meter pro Minute. Der getränkte Teppich gelangt in einen Schleifendämpfer, wo er während 10 Minuten mit Sattdampf von 98 bis 100° behandelt wird.

Nach dem Waschen in einer Breitwaschmaschine erhält man einen gleichmässig grün gefärbten Teppich.

Verwendet man anstelle von 4,5 Teilen des gelben Farbstoffs der Formel (7) und 1,5 Teilen der blauen Farbstoffmischung B die in der folgenden Tabelle 4 angegebenen Farbstoffe bzw. Farbstoffmischungen so erhält man in dem angegebenen Farbton gleichmässig gefärbte Teppiche.

**Tabelle 4**

| Beispiel | Farbstoffe | Farbton |
|---|---|---|
| 33 | 2,7 Teile des Farbstoffs der Formel (7)<br>1,2 Teile des Farbstoffs der Formel (8)<br>1,3 Teile der Farbstoffmischung B | neutrales braun |
| 34 | 2,4 Teile des Farbstoffs der Formel (7)<br>2,3 Teile des Farbstoffs der Formel (8)<br>1,0 Teile der Farbstoffmischung B | rotbraun |

| Beispiel | Farbstoffe | Farbton |
|---|---|---|
| 35 | 3,0 Teile des Farbstoffs der Formel (7)<br>0,4 Teile des Farbstoffs der Formel (8)<br>1,2 Teile der Farbstoffmischung B | oliv |
| 36 | 4,5 Teile des Farbstoffs der Formel (7)<br>1,5 Teile der Farbstoffmischung E | grün |
| 37 | 2,7 Teile des Farbstoffs der Formel (7)<br>1,2 Teile des Farbstoffs der Formel (8)<br>1,3 Teile der Farbstoffmischung E | neutrales braun |
| 38 | 2,4 Teile des Farbstoffs der Formel (7)<br>2,3 Teile des Farbstoffs der Formel (7)<br>1,0 Teile der Farbstoffmischung E | rotbraun |
| 39 | 3,0 Teile des Farbstoffs der Formel (7)<br>0,4 Teile des Farbstoffs der Formel (8)<br>1,2 Teile der Farbstoffmischung E | oliv |
| 40 | 2,7 Teile des Farbstoffs der Formel (7)<br>1,2 Teile des Farbstoffs der Formel (8)<br>1,3 Teile der Farbstoffmischung H | neutrales braun |
| 41 | 2,4 Teile des Farbstoffs der Formel (7)<br>2,3 Teile des Farbstoffs der Formel (8)<br>1,0 Teile der Farbstoffmischung H | rotbraun |
| 42 | 3,0 Teile des Farbstoffs der Formel (7)<br>0,4 Teile des Farbstoffs der Formel (8)<br>1,2 Teile der Farbstoffmischung H | oliv |

**Beispiel 43**

(Woll-Kontinue-Färbung)

Ein Wollstoff wird mit einer Flotte, enthaltend 2,6 Teile des gelben Farbstoffs der Formel (7), 5,2 Teile des roten Farbstoffs der Formel (8), 15,7 Teile der blauen Farbstoffmischung B, 2,0 Teile eines Verdickungsmittels auf der Basis von Alginat, 22,0 Teile eines koazervatbildenden Klotzmittels auf der Basis eines Kondensationsproduktes einer höher molekularen Fettsäure mit einem Oxyalkylamin und 8,0 Teile 80%ige Ameisensäure in 1000 Teilen Wasser foulardiert, wobei eine Flottenaufnahme von 85 %, bezogen auf das Gewicht von Wolle, erreicht wird. Anschliessend dämpft man während 15 Minuten in Sattdampf von 98 bis 100° und wäscht. Man erhält eine gleichmässige Olivefärbung.

Verwendet man anstelle von 15,7 Teilen der blauen Farbstoffmischung B 15,7 Teile der blauen Farbstoffmischung E oder H so erhält man bei sonst gleicher Verfahrensweise ebenfalls gleichmässig oliv gefärbte Wollstoffe.

**Beispiel 44**

500 $m^2$ eines Polyamid(6.6)-Schnittflorteppichs (Velourware mit Polypropylenbändchenrücken) mit einem Quadratmetergewicht von 535 g werden in einer Flotte, die pro Liter 1 g des Umsetzungsprodukts aus 1 Mol Nonylphenol und 9 Mol Aethylenoxyd enthält, kontinuierlich vorgenetzt und dann auf eine Flottenaufnahme von 40 Gewichtsprozent abgesaugt.

In einer Verschäumungsvorrichtung (Mixer) wird aus folgender wässeriger Flotte ein Farbschaum hergestellt, dessen Verschäumungsgrad 1:10 beträgt:

0,6 g/l des Farbstoffs der Formel (7),
0,40 g/l des Farbstoffs der Formel (8),
0,35 g/l der Farbstoffmischung B aus Beispiel 1
2,5 g/l eines Schaumstabilisatorgemisches aus Kokosfettsäurediäthanolamid/Nonylphenolpolyglykol(11)äther und Lauryltriglykoläthersulfat-Natrium,
0,6 g/l des Siloxanoxyalkylen-Copolymerisates der Formel
$(CH_3)_3Si$-O

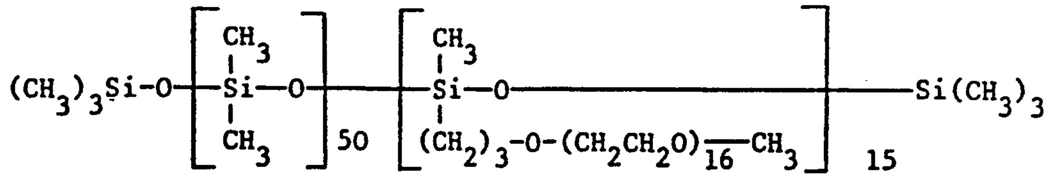

1 g/l Natriumazetat, sowie Essigsäure zur Einstellung der Flotte auf einen pH-Wert von 6,0.

Dieser Schaum wird dann aus einem Schaumbehälter, der eine verstellbare Rakel für die Einstellung der gewünschten Schaumdicke aufweist, über eine Auftragswalze mittels einer Rutsche auf die Polseite des durch die Färbeanlage laufenden Teppichs aufgebracht (Laufgeschwindigkeit 9 m/Minute). Die Schichthöhe des Schaums beträgt 8 mm. Der Farbschaumauftrag beträgt 135%.

Anschliessend durchläuft der Teppich eine Vakuumpassage, in der von der Rückseite her die Schaumschicht teilweise in den Teppich eingesaugt wird (Unterdruck von ≈0,1 bar), wodurch die Höhe der Schaumschicht etwas reduziert wird. Ueber eine Transportwalze läuft der Teppich dann in einen Dämpfer (102°C, Sattdampf), wo ein leichtes Aufschäumen und dann ein Zerstören des Schaums erfolgt. Anschliessend wird der Teppich mit Wasser von etwa 80°C abgespritzt, dann abgesaugt und bei 100 bis 130°C auf einem Siebtrommeltrockner getrocknet.

Das erhaltene Teppichmaterial ist egal, in einem beigen Farbton gefärbt, zeigt eine hervorragende Durchfärbung, die Weichheit und Bauschigkeit des Materials wird durch das Schaumfärben positiv beeinflusst.

Verwendet man anstelle von 0,35 g/l der blauen Farbstoffmischung B 0,35 g/l der blauen Farbstoffmischung E oder G, so erhält man bei sonst gleicher Verfahrensweise ebenfalls beige, egale, streifenfreie Teppichfärbungen.

**Patentansprüche**

1. Farbstoffmischung, dadurch gekennzeichnet, dass sie einen Farbstoff der Formel

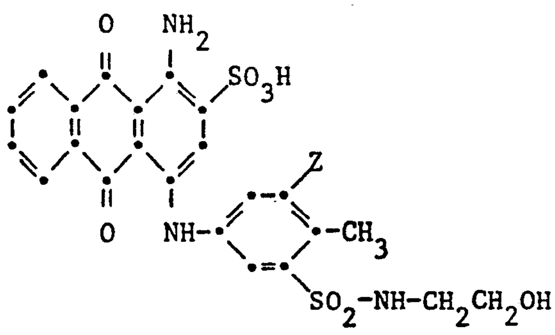

(1),

worin Z Wasserstoff oder Methyl bedeutet, und einen Farbstoff der Formel

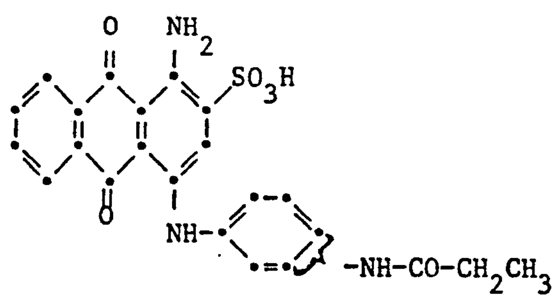

(2)

enthält, wobei Z in Formel (1) Wasserstoff ist, wenn der Propionylaminorest in Formel (2) in m-Stellung zur NH-Gruppe gebunden ist.

2. Farbstoffmischung gemäss Anspruch 1, dadurch gekennzeichnet, dass sie einen Farbstoff der Formel

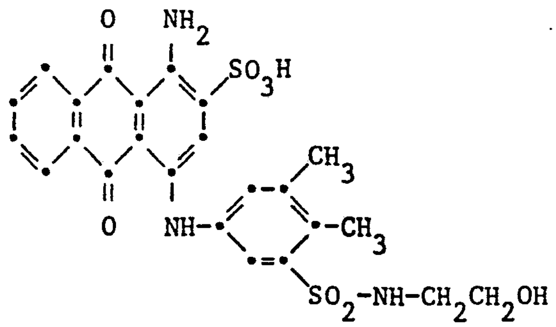

(3)

und einen Farbstoff der Formel

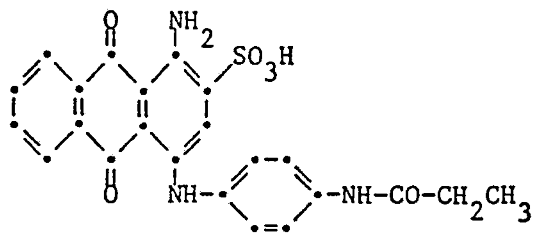

(4)

enthält.

3. Farbstoffmischung gemäss Anspruch 1, dadurch gekennzeichnet, dass sie einen Farbstoff der Formel

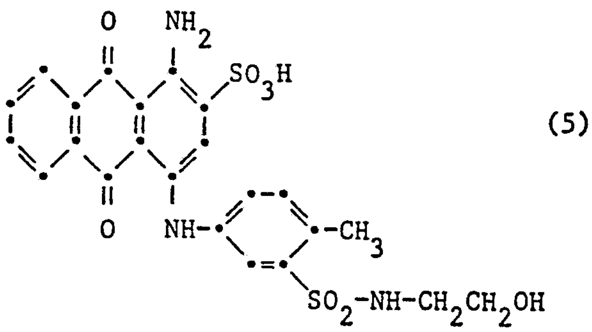

(5)

und einen Farbstoff der formel (2) enthält.

4. Farbstoffmischung gemäss Anspruch 3, dadurch gekennzeichnet, dass sie als Farbstoff der Formel (2) einen Farbstoff der Formel

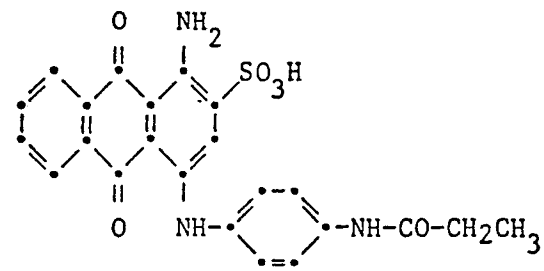

(4)

enthält.

5. Farbstoffmischung gemäss Anspruch 3, dadurch gekennzeichnet, dass sie als Farbstoff der Formel (2) einen Farbstoff der Formel

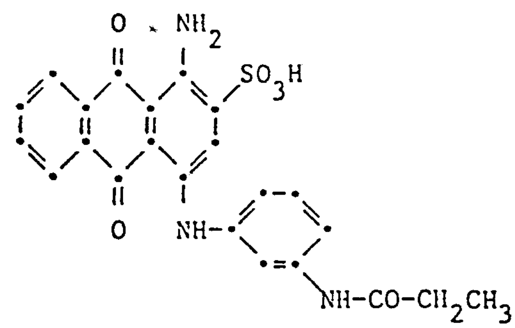

(6)

enthält.

6. Farbstoffmischung gemäss einem der Ansprüche 1 bis 5, dadurch gekennzeichnet, dass das Verhältnis der Farbstoffe der Formeln (1) und (2), (3) und (4), (5) und (2), (5) und (4) oder (5) und (6) 20:80 bis 80:20 ist.

7. Farbstoffmischung gemäss Anspruch 6, dadurch gekennzeichnet, dass das Verhältnis der Farbstoffe der Formeln (3) und (4), (5) und (4) oder (5) und (6) 40:60 bis 60:40 ist.

8. Farbstoffmischung gemäss Anspruch 7, dadurch gekennzeichnet, dass das Verhältnis der Farbstoffe der Formeln (3) und (4), (5) und (4) oder (5) und (6) 50:50 bis 60:40 ist.

9. Verfahren zum Färben und Bedrucken von natürlichen oder synthetischen Polyamidmaterialien mit einer Farbstoffmischung, dadurch gekennzeichnet, dass man eine Farbstoffmischung gemäss einem der Ansprüche 1 bis 8 verwendet.

10. Verfahren zum Färben und Bedrucken von natürlichen und synthetischcn Polyamidmaterialien unter Verwendung der Farbstoffmischung gemäss einem der Ansprüche 1 bis 8 in Kombination mit anderen Farbstoffen.

11. Verfahren gemäss Anspruch 10 zum Trichromie-Färben oder -Bedrucken, dadurch gekennzeichnet, dass man eine Farbstoffmischung gemäss einem der Ansprüche 1 bis 8 in Kombination mit mindestens einem roten Farbstoff und mindestens einem gelben oder orangen Farbstoff verwendet.

12. Das gemäss einem der Ansprüche 9 bis 11 gefärbte oder bedrucken Material, insbesondere Textilmaterial.

**Patentansprüche**

(Oesterreich)

1. Verfahren zur Herstellung einer Farbstoffmischung durch Mischen von zwei Farbstoffen A und B, dadurch gekennzeichnet, dass als Farbstoff A ein Farbstoff der Formel

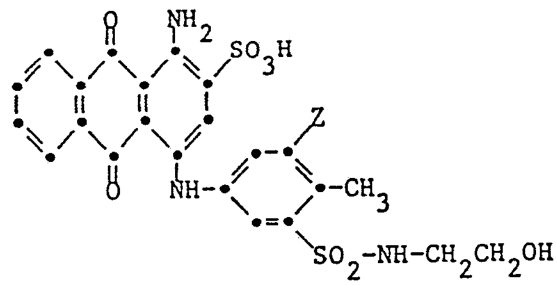

(1) ,

worin Z Wasserstoff oder Methyl bedeutet, und als Farbstoff B ein Farbstoff der Formel

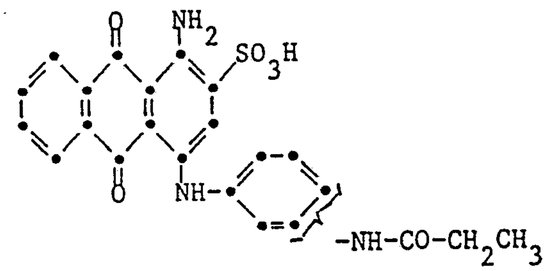

(2) ,

wobei Z in Formel (1) Wasserstoff ist, wenn der Propionylaminorest in Formel (2) in m-Stellung zur NH-Gruppe gebunden ist, verwendet wird.

2. Verfahren gemäss Anspruch 1, dadurch gekennzeichnet, dass man einen Farbstoff der Formel

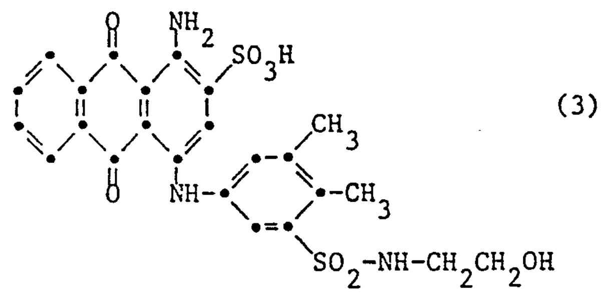

(3)

und einen Farbstoff der Formel

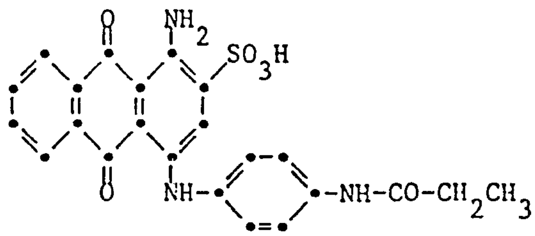

(4)

verwendet.

3. Verfahren gemäss Anspruch 1, dadurch gekennzeichnet, dass man einen Farbstoff der Formel

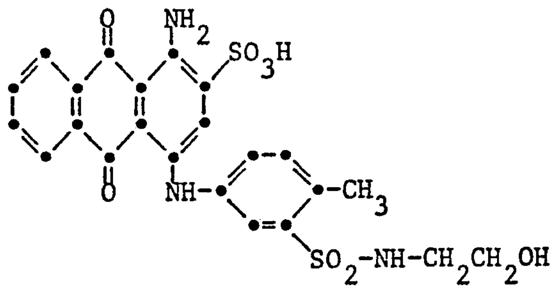

(5)

und einen Farbstoff der Formel (2) verwendet.

4. Verfahren gemäss Anspruch 3, dadurch gekennzeichnet, dass man als Farbstoff der Formel (2) einen Farbstoff der Formel

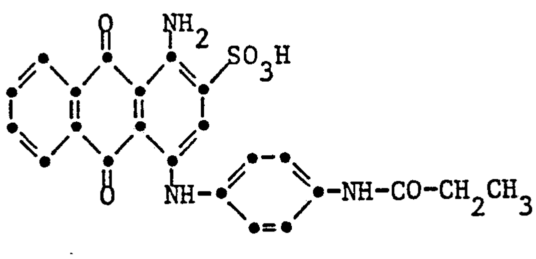

(4)

verwendet.

5. Verfahren gemäss Anspruch 3, dadurch gekennzeichnet, dass man als Farbstoff der Formel (2) einen Farbstoff der Formel

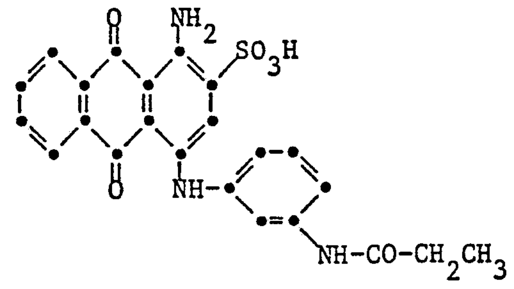

(6)

verwendet.

6. Verfahren gemäss einem der Ansprüche 1 bis 5, dadurch gekennzeichnet, dass das Verhältnis der verwendeten Farbstoffe der Formeln (1) und (2), (3) und (4), (5) und (2), (5) und (4) oder (5) und (6) 20:80 bis 80:20 ist.

7. Verfahren gemäss Anspruch 6, dadurch gekennzeichnet, dass das Verhältnis der verwendeten Farbstoffe der Formeln (3) und (4), (5) und (4) oder (5) und (6) 40:60 bis 60:40 ist.

8. Verfahren gemäss Anspruch 7, dadurch gekennzeichnet, dass das Verhältnis der verwendeten Farbstoffe der Formeln (3) und (4), (5) und (4) oder (5) und (6) 50:50 bis 60:40 ist.

9. Verfahren zum Färben und Bedrucken von natürlichen oder synthetischen Polyamidmaterialien mit einer Farbstoffmischung, dadurch gekennzeichnet, dass man eine gemäss einem der Ansprüche 1 bis 8 erhaltene Farbstoffmischung verwendet.

10. Verfahren zum Färben und Bedrucken von natürlichen und synthetischen Polyamidmaterialien unter Verwendung der gemäss einem der Ansprüche 1 bis 8 erhaltenen Farbstoffmischung in Kombination mit anderen Farbstoffen.

11. Verfahren gemäss Anspruch 10 zum Trichromie-Färben oder -Bedrucken, dadurch gekennzeichnet, dass man eine gemäss einem der Ansprüche 1 bis 8 erhaltene Farbstoffmischung in Kombination mit mindestens einem roten Farbstoff und mindestens einem gelben oder orangen Farbstoff verwendet.

**Claims**

for the Contracting States: BE, DE, FR, GB, IT, NL, CH + LI

1. A dye mixture which contains a dye of the formula

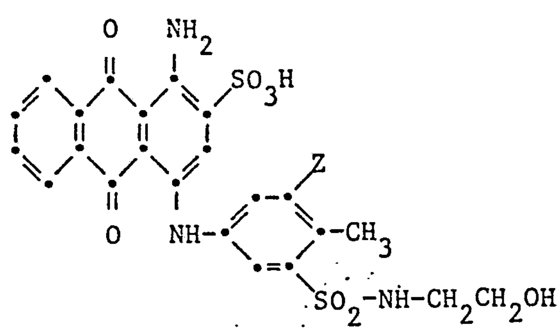

(1)

wherein Z is hydrogen or methyl and a dye of the formula

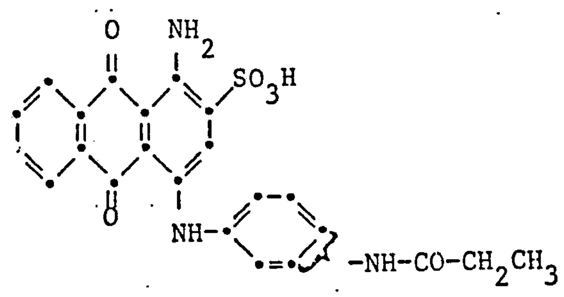

(2)

Z in the formula (1) being hydrogen when the propionylamino group in the formula (2) is bound in the m-position with respect to the NH group.

2. A dye mixture according to claim 1, which contains a dye of the formula

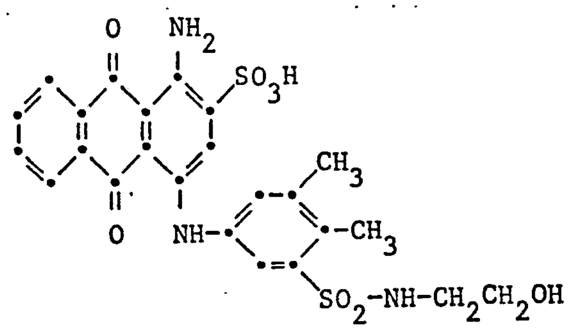

(3)

and a dye of the formula

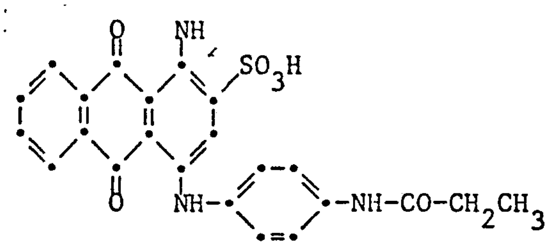

(4) .

3. A dye mixture according to claim 1, which contains a dye of the formula

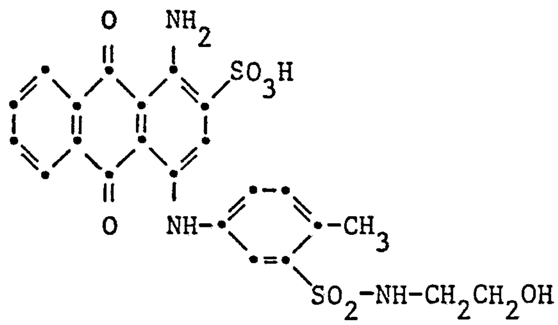

(5)

and a dye of the formula (2).

4. A dye mixture according to claim 3, which contains a dye of the formula

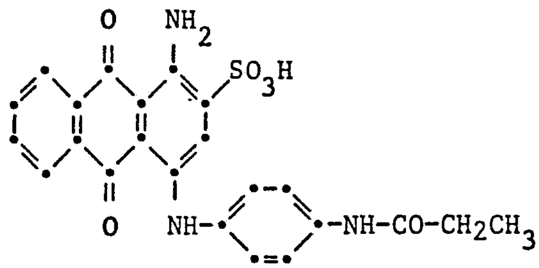

(4)

as dye of the formula (2).

5. A dye mixture according to claim 3, which contains a dye of the formula

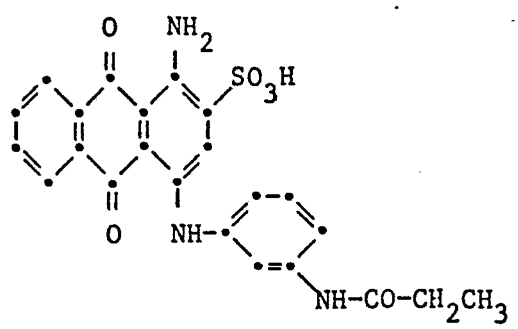

(6)

as dye of the formula (2).

6. A dye mixture according to any one of claims 1 to 5, wherein the ratio between the dyes of the formulae (1) and (2), (3) and (4), (5) and (2), (5) and (4) or (5) and (6) is 20:80 to 80:20.

7. A dye mixture according to claim 6, wherein the ratio between the dyes of the formulae (3) and (4), (5) and (4) or (5) and (6) is 40:60 to 60:40.

8. A dye mixture according to claim 7, wherein the ratio between the dyes of the formulae (3) and (4), (5) and (4) or (5) and (6) is 50:50 to 60:40.

9. A process for dyeing and printing natural and synthetic polyamide materials with a dye mixture, which comprises the use of a dye mixture according to any one of claims 1 to 8.

10. A process for dyeing and printing natural and synthetic polyamide materials, which comprises the use of the dye mixture according to any one of claims 1 to 8 in combination with other dyes.

11. A process according to claim 10 for trichromatic dyeing or printing, which comprises the use of a dye mixture according to any one of claims 1 to 8 in combination with at least one red dye and at least one yellow or orange dye.

12. The material, particularly textile material, dyed or printed according to any one of claims 9 to 11.

**Claims**

for the Contracting State: AT

1. A process for the preparation of a dye mixture by mixing two dyes A and B which process comprises the use of a dye of the formula

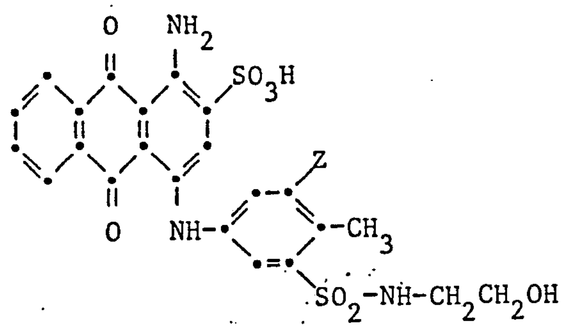

(1)

wherein Z is hydrogen or methyl as dye A and a dye of the formula

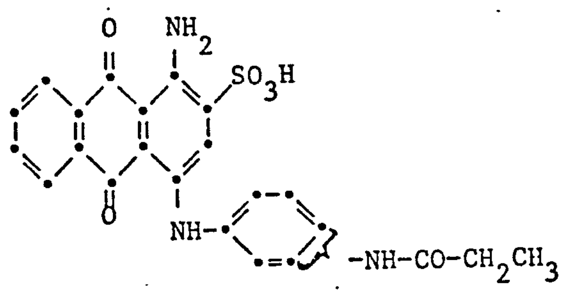

(2)

as dye B, Z in the formula (1) being hydrogen when the propionylamino group in the formula (2) is bound in the m-position with respect to the NH group.

2. A process according to claim 1, which comprises the use of dye of the formula

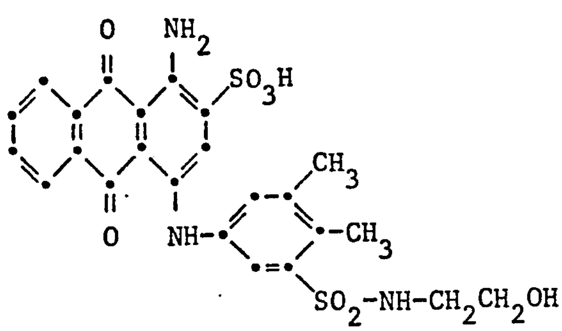

(3)

and a dye of the formula

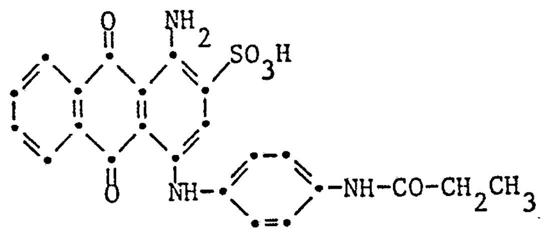

(4) .

3. A process according to claim 1, which comprises the use of a dye of the formula

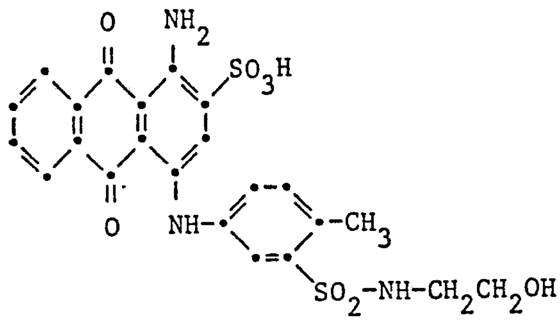

(5)

and a dye of the formula (2).

4. A process according to claim 3, which comprises the use of a dye of the formula

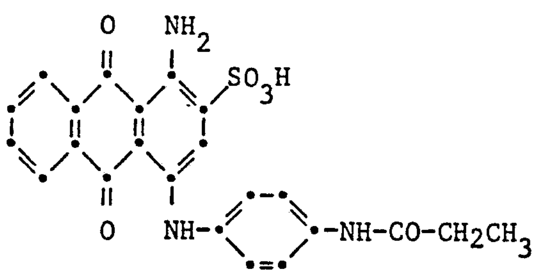

(4) .

as dye of the formula (2).

5. A process according to claim 3, which comprises the use of a dye of the formula

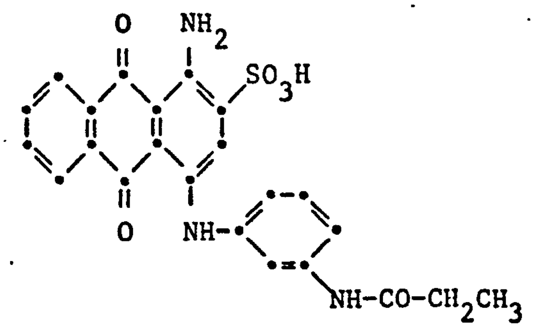

(6)

as dye of the formula (2).

6. A process according to any one of claims 1 to 5, wherein the ratio between the dyes of the formulae (1) and (2), (3) and (4), (5) and (2), (5) and (4) or (5) and (6) is 20:80 to 80:20.

7. A process according to claim 6, wherein the ratio between the dyes of the formulae (3) and (4) (5) and (4) or (5) and (6) is 40:60 to 60:40.

8. A process according to claim 7, wherein the ratio between the dyes of the formulae (3) and (4), (5) and (4) or (5) and (6) is 50:50 to 60:40.

9. A process for dyeing and printing natural and synthetic polyamide materials with a dye mixture, which comprises the use of a dye mixture obtained according to any one of claims 1 to 8.

10. A process for dyeing and printing natural and synthetic polyamide materials, which comprises the use of the dye mixture obtained according to any one of claims 1 to 8 in combination with other dyes.

11. A process according to claim 10 for trichromatic dyeing or printing, which comprises the use of a dye mixture obtained according to any one of claims 1 to 8 in combination with at least one red dye and at least one yellow or orange dye.

**Revendications**

pour les Etats contractants: BE, DE, FR, GB, IT, NL, CH + LI

1. Mélange de colorants, caractérisé en ce qu'il contient un colorant de formule

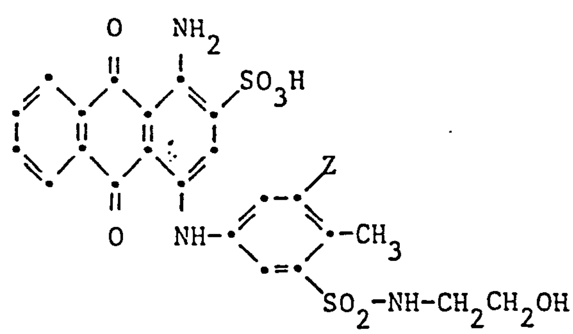

(1),

dans laquelle Z représente un atome d'hydrogène ou un groupe méthyle, et un colorant de formule

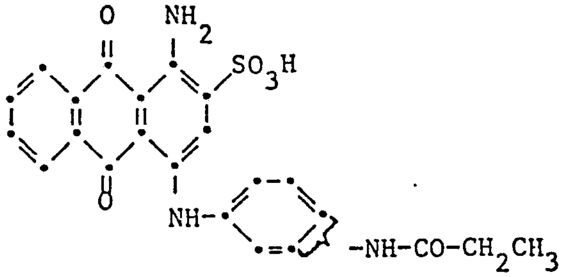

(2)

Z représentant dans la formule (1) un atome d'hydrogène quand le groupe propionylamino de la formule (2) est fixé en position méta par rapport au groupe -NH-.

2. Mélange de colorants conforme à la revendication 1, caractérisé en ce qu'il contient un colorant de formule

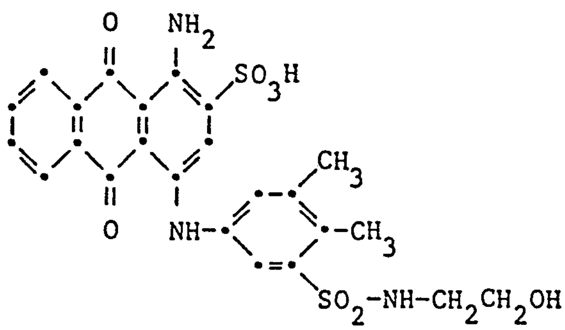

(3)

et un colorant de formule

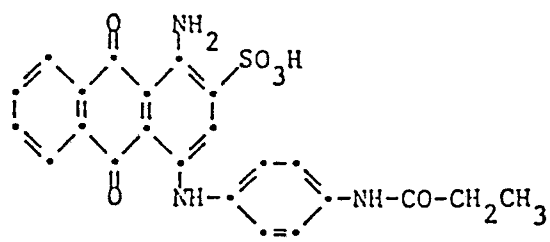

(4)

3. Mélange de colorants conforme à la revendication 1, caractérisé en ce qu'il contient un colorant de formule

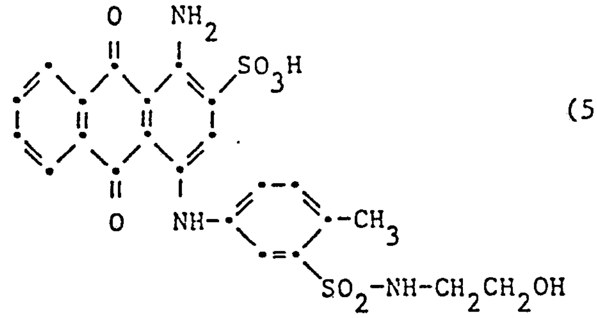

(5)

et un colorant de formule (2).

4. Mélange de colorants conforme à la revendication 3, caractérisé en ce qu'il contient comme colorant de formule (2) un colorant de formule

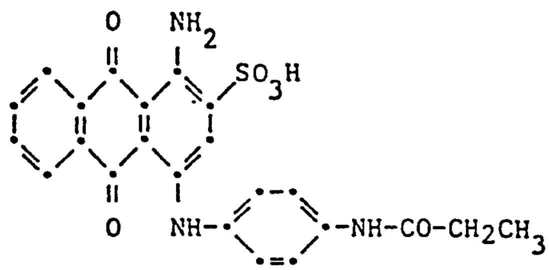

(4)

5. Mélange de colorants conforme à la revendication 3, caractérisé en ce qu il contient comme colorant de formule (2) un colorant de formule

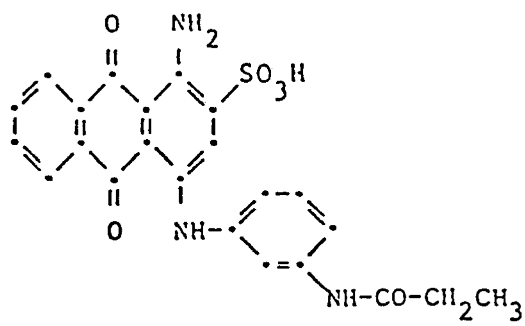

(6)

6. Mélange de colorants conforme à l'une des revendications 1 à 5 caractérisé en ce que le rapport des colorants de formules (1) et (2), (3) et (4), (5) et (2), (5) et (4), ou (5) et (6), est de 20:80 à 80:20.

7. Mélange de colorants conforme à la revendication 6, caractérisé en ce que le rapport des colorants de formules (3) et (4), (5) et (4), ou (5) et (6), est de 40:60 à 60:40.

8. Mélange de colorants conforme à la revendication 7, caractérisé en ce que le rapport des colorants de formules (3) et (4), (5) et (4), ou (5) et (6), est de 50:50 à 60:40.

9. Procédé de teinture et d'impression de matériaux en polyamides naturels ou synthétiques avec un mélange de colorants, caractérisé en ce que l'on utilise un mélange de colorants conforme à l'une des revendications 1 à 8.

10. Procédé de teinture et d'impression de matériaux en polyamides naturels ou synthétiques par utilisation de mélange de colorants conforme à l'une des revendications 1 à 8, en combinaison avec d'autres colorants.

11. Procédé conforme à la revendication 10 pour la teinture ou l'impression en trichromie caractérisé en ce que l'on utilise un mélange de colorants conforme à l'une des revendications 1 à 8 en combinaison avec au moins un colorant rouge et au moins un colorant jaune ou orange.

12. Matériau teint ou imprimé conformément à l'une des revendications 9 à 11, en particulier matériau textile.

**Revendications**

pour l'Etat Contractant: AT

1. Procédé pour la préparation d'un mélange de colorants par mélange de deux colorants A et B, caractérisé en ce que l'on utilise comme colorant A un colorant de formule

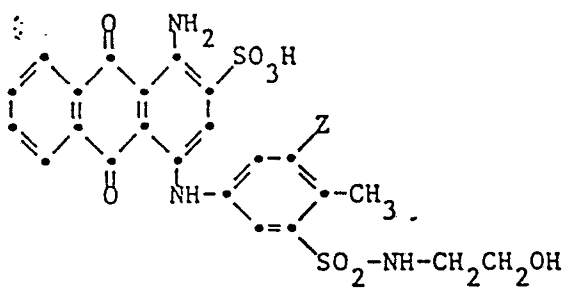

(1) ,

dans laquelle Z représente un atome d'hydrogène ou un groupe méthyle, et comme colorant B un colorant de formule

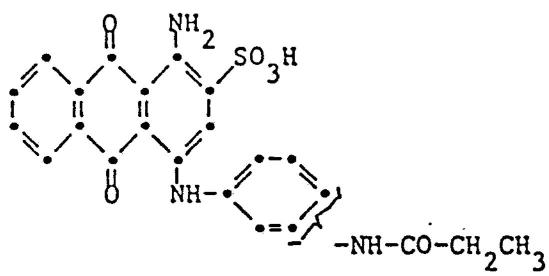

(2) ,

Z représentant dans la formule (1) un atome d'hydrogène quand le groupe propionylamino dans la formule (2) est fixé en position méta par rapport au groupe -NH-.

2. Procédé conforme à la revendication 1, caractérisé en ce que l'on utilise un colorant de formule

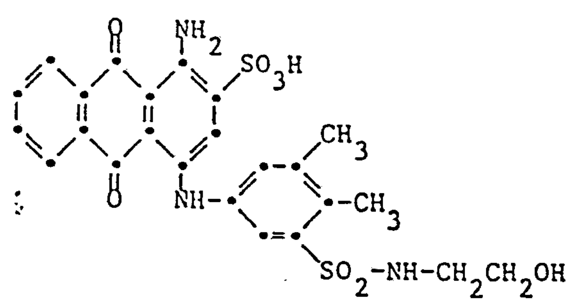

(3)

et un colorant de formule

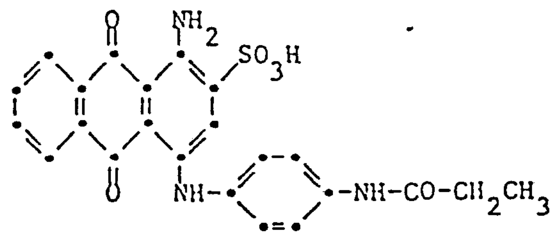

(4)

3. Procédé conforme à la revendication 1, caractérisé en ce que l'on utilise un colorant de formule

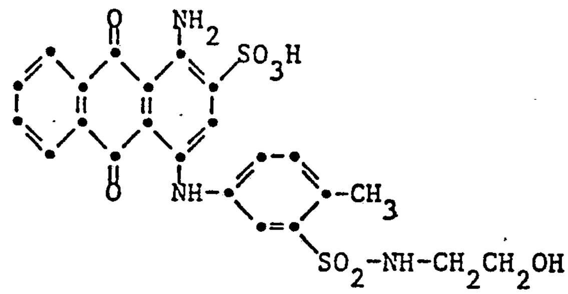

(5)

et un colorant de formule (2).

4. Procédé conforme à la revendication 3 caractérisé en ce que l'on utilise comme colorant de formule (2) un colorant de formule

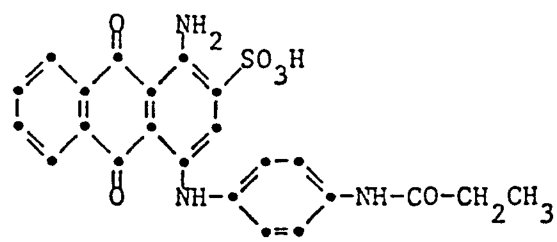

(4)

5. Procédé conforme à la revendication 3, caractérisé en ce que l'on utilise comme colorant de formule (2) un colorant de formule

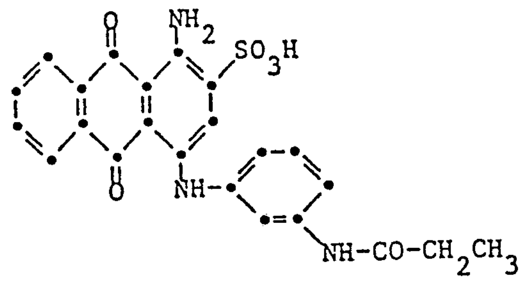

(6)

6. Procédé conforme à l'une des revendications 1 à 5, caractérisé en ce que le rapport des colorants utilisés de formules (1) et (2), (3) et (4), (5) et (2), (5) et (4), ou (5) et (6), est de 20:80 à 80:20.

7. Procédé conforme à la revendication 6, caractérisé en ce que le rapport des colorants utilisés de formules (3) et (4), (5) et (4), ou (5) et (6), est de 40:60 à 60:40.

8. Procédé conforme à la revendication 7, caractérisé en ce que le rapport des colorants utilisés de formules (3) et (4), (5) et (4), ou (5) et (6), est de 50:50 à 60:40.

9. Procédé pour la teinture et l'impression de matériaux en polyamides naturels ou synthétiques, avec un mélange de colorants, caractérisé en ce que l'on utilise un mélange de colorants obtenu conformément à l'une des revendications 1 à 8.

10. Procédé pour la teinture et l'impression de matériaux en polyamides synthétiques ou naturels par utilisation d'un mélange de colorants obtenu conformément à l'une des revendications 1 à 8, en combinaison avec d'autres colorants.

11. Procédé conforme à la revendication 10 pour la teinture ou l'impression en trichromie, caractérisé en ce que l'on utilise un mélange de colorants obtenu conformément à l'une des revendications 1 à 8, en combinaison avec au moins un colorant rouge et au moins un colorant jaune ou orange.